# EUROPEAN PATENT SPECIFICATION

(11) **EP 1 725 314 B1**
(45) Date of publication and mention of the grant of the patent: **18.05.2011**
(21) Application number: 04721398.8
(22) Date of filing: 17.03.2004
(51) Int. Cl.: B01D 29/66, B01D 35/30

(54) **FINE FILTERING APPARATUS WITH FILTER MEDIA COMPRISING FLEXIBLE FIBERS**
FEINFILTERVORRICHTUNG MIT FILTERMEDIUM AUS FLEXIBLEN FASERN
APPAREIL DE FILTRAGE DE MATIERES FINES AVEC UN MEDIA FILTRANT COMPRENANT DES FIBRES FLEXIBLES

(30) Priority: 08.03.2004 KR 2004015580
(43) Date of publication of application: 29.11.2006
(73) Proprietor: Veolia Water Solutions & Technologies Support, 94410 Saint-Maurice (FR)
(72) Inventor: HAN, Ki-Baek, Busanjin-gu, Busan-city 614-754 (KR); KIM, Hyo-Sang, Busan-city 612-766 (KR); ROH, Myung-Gyoo, Seoul 138-120 (KR); HWANG, Moon-Hyun, Yangsan-city, Kyungsangnam-do 626-050 (KR); CHO, Chul-Hee, Jungrang-gu, Seoul 131-868 (KR); PARK, Sung-Ho, Busan-city 612-804 (KR); YOO, Sang-Woong, Busan-city 606-053 (KR); HONG, Sung-Kyu, Busan-city 609-837 (KR); LEE, Sung-Hoon, Ulsan-city 680-100 (KR); KIM, Chun-Keyng, Busan-city 607-062 (KR)
(74) Representative: Larcher, Dominique
(86) International application number: PCT/KR2004/000576
(87) International publication number: WO 2005/084776

(56) References cited:
- WO-A1-00/63122
- WO-A1-02/11867
- DE-U1- 8 804 741
- JP-A- 7 178 320
- JP-A- 9 262 443
- JP-A- 56 161 809
- KR-A- 2003 094 150
- KR-A- 20020 068 009
- SU-A- 473 508
- US-A- 5 690 823

## Description

### Technical Field

The present invention relates to an apparatus for effectively filtering and separating fine floc, algae, suspended solids, etc. remaining in water after biological and physiochemical treatment. More particularly, the present invention relates to a fine filtering apparatus in which a packing density can be controlled with flexible fibers, thereby improving filtration efficiency, the amount of clarified water, and filtering duration, and reducing the power consumption compared to a conventional filtering apparatus. In the filtering apparatus, flexible fibers having an effective diameter of 1 to 60 µm and which are flexible, elastic, and have proper surface roughness extend in the longitudinal direction of the apparatus. A jacket shaped unit for supplying source water (supplied water) has a porous structure. Clarified water (treated water) is discharged through a central porous chamber. The whole filter media layer can be utilized as a particle-entrapping space.

### Background Art

In general, wastewater, foul water, sewage, and drinkable water contain suspended solids and are discharged into a river or sea, thereby contaminating water resources, and leading to major difficulties in the use of the water resources. The suspended solids are solid matter such as particles (organic and inorganic) with a diameter of 0.1 microns or greater that are suspended in water.

Water containing suspended solids (suspended matter) contaminates water resources, making them unusable for drinking water for home or industrial use. Thus, filtering apparatuses are used to treat water, thereby producing drinkable water and water resources and reducing energy use by secondarily treating pretreated water.

A filtering apparatus including a variable filter layer is disclosed in Korean Patent Registration No. 10-0241198 (Application No. 10-1997-0050047 filed on September 30, 1997). In order to improve the performance of a filtering apparatus, fibers are used as filter media fixed to the bottom of the filtering apparatus, and tension is formed in the filter media by a pressure caused by supplied source water. The filter media are loosened by pressure caused by air and water supplied for washing the filter media. However, since the filter media layer is a single layer and the tension in the filter media is determined by the pressure caused by the supplied source water, a space for entrapping suspended solids is small. As a result, the filtering apparatus has short filtration duration, requires frequent washing, has difficulty in handling the fluctuation of quality of supplied water, and has difficulty in optionally controlling the desired quality and amount of water.

To solve these problems, an apparatus for separating suspended solids from a solution using conventional flexible fibers is disclosed in Korean Patent Registration No. 10-0324727 (Application No. 10-1999-0013396 filed on April 15, 1999). According to this disclosure, the depth of a filter layer and a space for entrapping particulates are adjustable according to the length of fibers used as filter media, and the pore size of filter media, the amount of particulates to be entrapped, and the quality of clarified water can be easily controlled by the filling density of the flexible fibers. Therefore, the filtering apparatus can effectively cope with fluctuations in the quality of source water, but it is difficult to automate the filling of the filter media using the flexible and elastic fibers and the size of the filtering apparatus must be increased due to a low filtration rate.

To solve these problems, a conventional apparatus for filtering suspended solids in water is disclosed in Korean Patent Registration No. 10-0354836 (Application No. 10-2001-0013448 filed on March 15, 2001). In this case, the direction of water passing through a filter media layer is the same as the longitudinal direction of the filter media filled, and the filtration is performed by the filter media and a capillary phenomenon caused by the filter media filled in the longitudinal direction of the filtering apparatus. The apparatus includes fibers that are easily filled and the filtration rate is greatly increased, thereby allowing the size of the apparatus to be decreased. However, it is difficult to filter suspended solids with a diameter of less than 5 µm in water and not all of the filtering layer is used.

### Brief Description of the Drawings

FIG.1 is a side view of a fine filtering apparatus having controllable packing density and including flexible fibers according to an embodiment of the present invention;
FIG. 2 is a side sectional view of the fine filtering apparatus of FIG. 1;
FIG. 3 is a side view of a porous chamber of the fine filtering apparatus of FIG. 1;
FIGS. 4 and 5 are side views of different lower attached structures of the fine filtering apparatus of FIG. 1, respectively;
FIGS. 6 through 8 are plan views of different filter media fixing plates of the fine filtering apparatus of FIG. 1, respectively;
FIG. 9 is a side view of a supplied water guide jacket of the fine filtering apparatus of FIG. 1;
FIG. 10 is a perspective view of a packing density control plate of the fine filtering apparatus of FIG. 1;
FIG. 11 is a perspective view of a concentrated filtrate discharge jacket of the fine filtering apparatus of FIG. 1;
FIG. 12 illustrates the operation of the fine filtering apparatus of FIG. 1 during filtration;
FIG. 13 illustrates the operation of the fine filtering apparatus of FIG. 1 during backwashing;
FIGS. 14 through 19 are graphs of results obtained using the fine filtering apparatus of FIG 1, and more particularly;

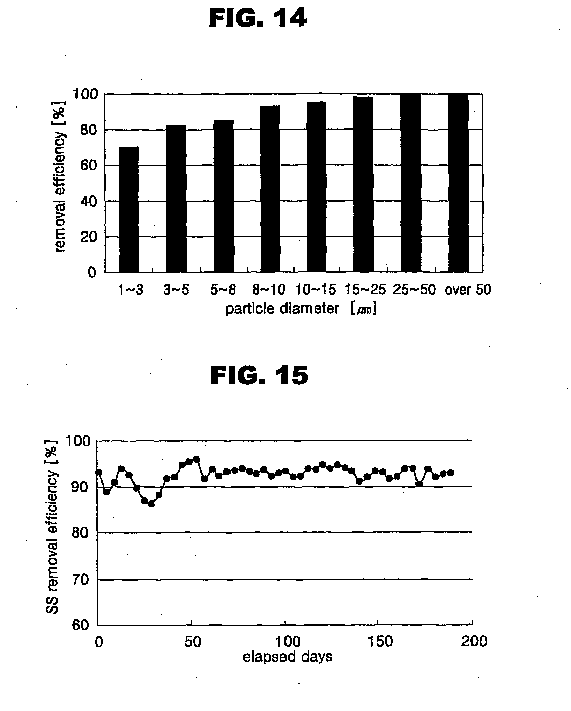

FIG. 14 is a bar graph illustrating removal efficiency with respect to particle diameter of suspended solids in water;
FIG. 15 is a graph illustrating removal efficiency of suspended solids in water with respect to operating duration;

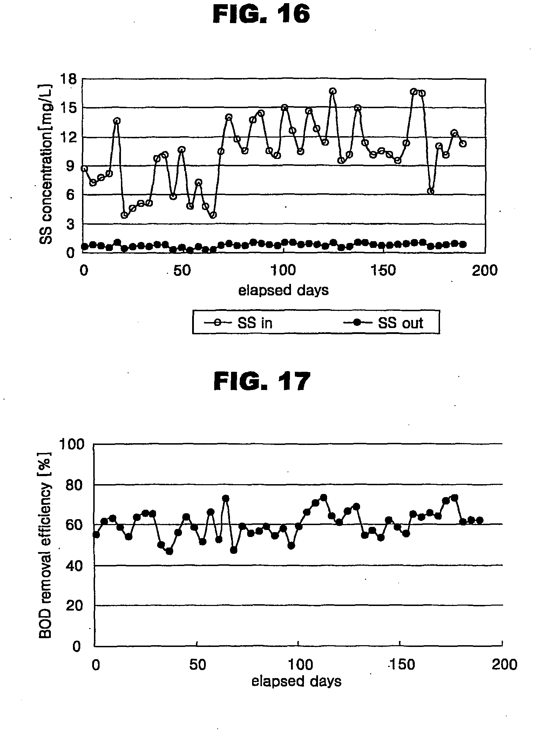

FIG. 16 is a graph illustrating influx/efflux concentrations of suspended solids in water with respect to operating duration;
FIG. 17 is a graph illustrating removal efficiency of BOD with respect to operating duration;

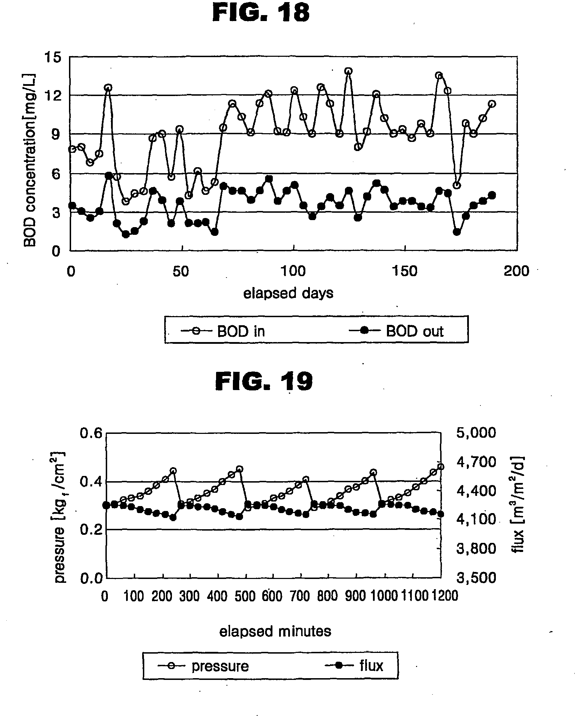

FIG. 18 is a graph illustrating influx/efflux concentrations of BOD with respect to operating duration; and
FIG. 19 is a graph illustrating variations of pressure and filtration flux with respect to operating duration.

### Disclosure of the Invention

To resolve the above and other problems, the present invention provides a fine filtering apparatus, in which flexible fibers can efficiently filter suspended solids contained in supplied water regardless of their kind, size, and state, backwash contaminants in the supplied water, and filter a large amount of water with low filtration resistance.

The present invention also provides a fine filtering apparatus in which a jacket shaped source water supply unit disposed on the bottom of a main body of the filtering apparatus has a porous structure. A filter media fixing plate having backwash air supply holes and a density control plate are installed at the end of below the jacket shaped source water supply unit to reduce an access flow rate and inhibit backflow of supplied source water below the filter media fixing plate. A deep filtration mode in which a whole filter media layer used for entrapping particulates is used to reduce filtration resistance and increase filtration duration.

The present invention also provides a fine filtering apparatus in which flexible fibers are fixed to a filter media fixing plate having backwash air supply holes disposed on the bottom of the filtering apparatus. Upper ends of flexible fibers are not fixed so as to maintain their flexibility, and the flexible fibers extend in the longitudinal direction of the filtering apparatus when performing filtration and backwash, thereby increasing filtration and backwash efficiency and minimizing backwashing duration and the amount of backwash water.

The present invention also provides a fine filtering apparatus in which clarified water is discharged through a central porous chamber to maintain relatively high packing density of a discharge unit. A cross-sectional area of the discharge unit is increased to reduce filtrate discharge resistance, thereby facilitating fine filtering at low filtration pressure.

The present invention also provides a fine filtering apparatus in which a concentrated filtrate discharge unit has a jacket shape such that suspended solids entrapped by filter media can be smoothly discharged during backwashing.

The present invention also provides a fine filtering apparatus having simple and compact valves and other pipings and using filter source water as backwash water so as to eliminate the need for a treatment tank for backwash.

The present invention also provides a fine filtering apparatus in which a number of filtering devices are combined in parallel so as to treat a large amount of source water, thereby increasing throughput capacity.

According to an aspect of the present invention, there is provided a fine filtering apparatus including: a main body which is a main pathway of supplied water, the supplied water flowing in use in the longitudinal direction of the main body; filter media comprising flexible fibers enclosed by the main body and extending in the longitudinal direction of the main body, the flexible fibers being able to filter out a variety of suspended solids contained in the supplied water; a supplied water guide jacket supplying in use the supplied water to the side of the lower portion of the main body; a filter media fixing plate installed below the supplied water guide jacket and having a plurality of fixing holes fixing lower ends of the flexible fibers the upper end of the flexible fibers being not fixed; a density control plate having a doughnut shape, installed between the supplied water guide jacket and the filter media fixing plate and preventing the supplied water from flowing to the filter media fixing plate by increasing filling density of the flexible fibers fixed to the filter media fixing plate within a hollow portion of the density control plate; an inner porous chamber extending from the top of the main body and having a constant radius, the inner porous chamber increasing the filling density of upper ends of the flexible fibers, and having a plurality of treated water supply holes formed therein through which in use water treated by the filter media is discharged outside of the main body; and a concentrated filtrate discharge jacket covering a portion of the top and surrounding part of the outside of the main body for discharging in use during backwashing the concentrated filtrate with the solids entrapped by the filter media by injection of backwash water through the supply guide jacket outside of the main body.

A plurality of supplied water passing holes may be formed in the area of the main body corresponding to the supplied water guide jacket. In order to discharge the concentrated filtrate, during backwashing, outside of the main body, the filtering apparatus may have a cylindrical concentrated filtrate discharge jacket having a jacket shape and covering a portion of the top and surrounding part of the outside of the main body and discharging concentrated filtrate outside of the filtering apparatus via the top of the main body.

A plurality of concentrated filtrate passing holes may be formed on a portion of the main body corresponding to the concentrated filtrate discharge jacket.

The filtering apparatus may further include a lower attached structure supporting the filter media fixing plate from below and having a backwash air supply pipeline for supplying backwash air during backwashing during use.

A plurality of backwash air supply holes, through which the backwash air passes use in, may be formed in the filter media fixing plate in a hexagonal arrangement, or may be formed in the upper portion of the backwash air supply pipeline within the main body.

The volume of the inner porous chamber may be 10 to 50% of the volume of the main body.

The flexible fibers may be composed of a single material or different materials according to the supplied water to be filtered or a degree of treatment of the supplied water.

An extra water tank, pump, valve, and piping for backwash may be not required by using the supplied water as backwash water during backwashing.

Filtering and backwashing may be performed in the same direction by using the supplied water as the backwash water during backwashing.

During backwashing, backwash air intermittently supplied through the backwash air supply holes of the filter media fixing plate or the backwash air discharge holes of the backwash air supply pipeline may produce turbulence thereby generating shearing stress in the flexible fiber filter media and allowing contaminants entrapped by the filter media to separate from the filter media in a short period.

The backwash air may be generated by an air compressor, stored under high pressure in a storage tank connected to the backwash air supply pipeline, and then periodically supplied to the main body during backwashing.

### Best Mode for Carrying out the Invention

The present invention will now be described more fully with reference to the accompanying drawings, in which exemplary embodiments of the invention are shown. The invention may, however, be embodied in many different forms and should not be construed as being limited to the embodiments set forth herein; rather, these embodiments are provided so that this disclosure will be thorough and complete, and will fully convey the concept of the invention to those skilled in the art. In the drawings, the thicknesses of layers and regions are exaggerated for clarity. Like reference numerals in the drawings denote like elements, and thus their description will be omitted.

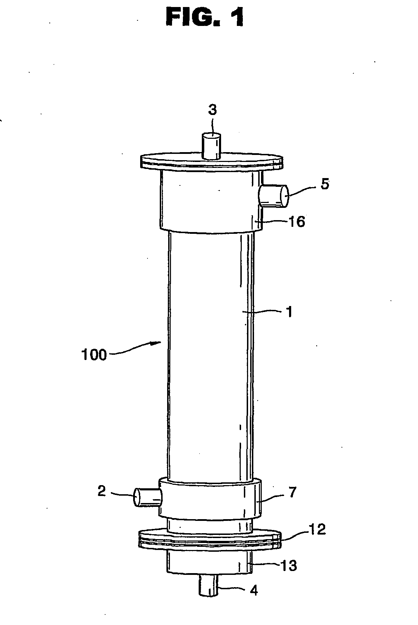

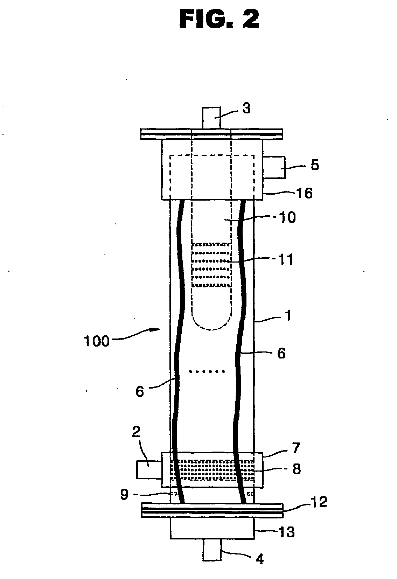

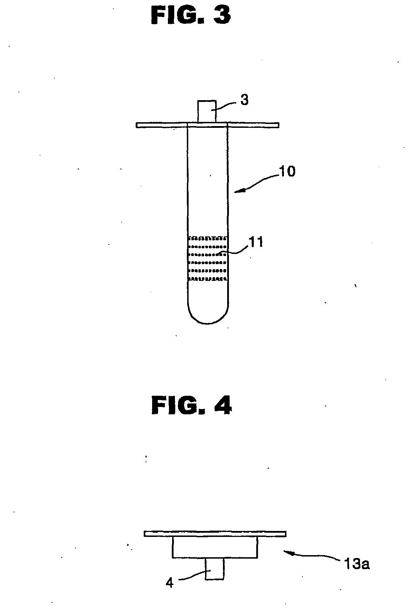

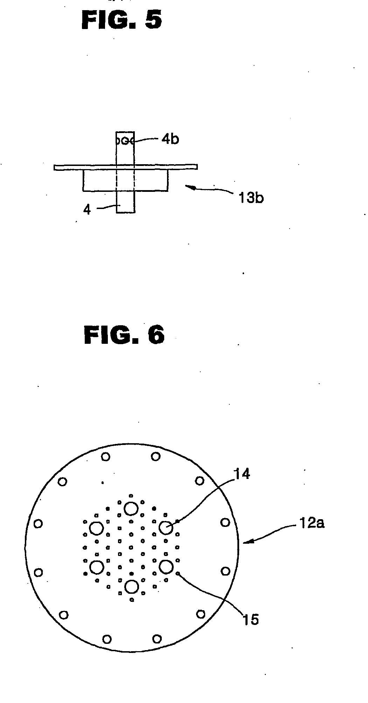

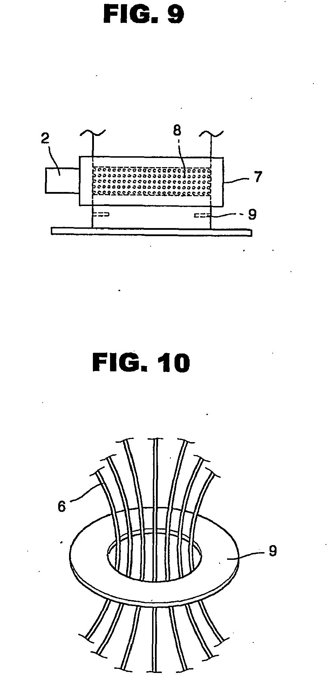

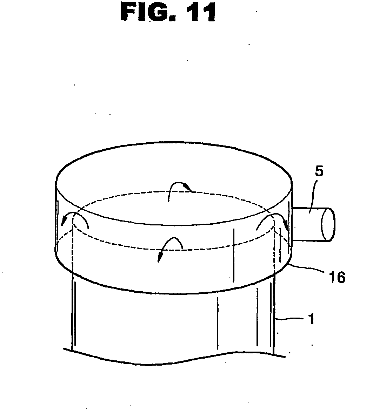

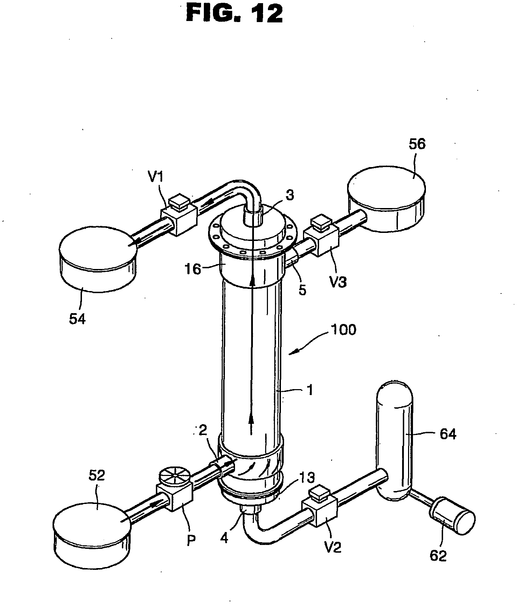

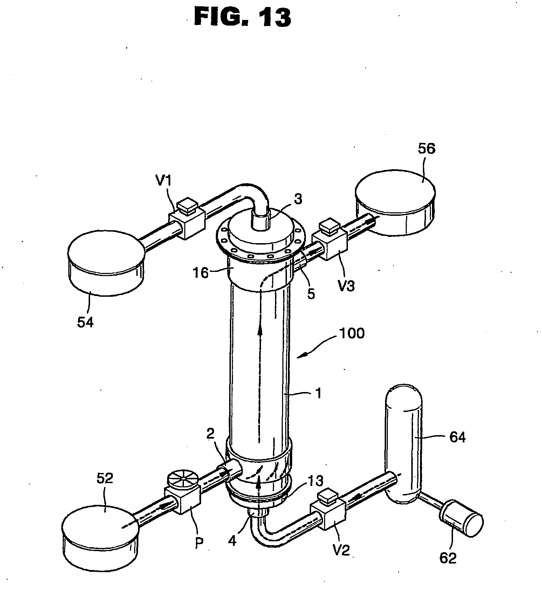

FIG.1 is a side view of a fine filtering apparatus with a controllable packing density and including flexible fibers according to an embodiment of the present invention. FIG. 2 is a side sectional view of the fine filtering apparatus of FIG. 1. FIG. 3 is a side view of a porous chamber of the fine filtering apparatus of FIG. 1. FIGS. 4 and 5 are side views of different lower attached structures of the fine filtering apparatus of FIG. 1, respectively. FIGS. 6 through 8 are plan views of different filter media fixing plates of the fine filtering apparatus of FIG. 1, respectively. FIG. 9 is a side view of a supplied water guide jacket of the fine filtering apparatus of FIG. 1. FIG. 10 is a perspective view of a density control plate of the fine filtering apparatus of FIG. 1. FIG. 11 is a perspective view of a concentrated filtrate discharge jacket of the fine filtering apparatus of FIG. 1. FIG. 12 illustrates the operation of the fine filtering apparatus of FIG. 1 during filtration. FIG. 13 illustrates the operation of the fine filtering apparatus of FIG. 1 during backwashing. FIGS. 14 through 19 are graphs of results obtained using the fine filtering apparatus of FIG. 1, and more particularly, FIG. 14 is a bar graph illustrating removal efficiency with respect to particle diameter of suspended solids in water, FIG. 15 is a graph illustrating removal efficiency of suspended solids in water with respect to operating duration, FIG. 16 is a graph illustrating influx/efflux concentrations of suspended solids in water with respect to operating duration, FIG. 17 is a graph illustrating removal efficiency of BOD with respect to operating duration, FIG. 18 is a graph illustrating influx/efflux concentrations of BOD with respect to operating duration, and FIG. 19 is a graph illustrating variations of pressure and filtration flux with respect to operating duration.

Referring to FIGS. 1 through 11, a filtering apparatus 100 according to an embodiment of the present invention includes a main body 1 which is a main pathway of supplied water (filtered source water and/or backwash source water) and encloses flexible fibers 6 extending in the longitudinal direction of the filtering apparatus. A supplied water guide jacket 7 supplies the supplied water into the side of the lower portion of the main body 1 and a filter media fixing plate 12 installed at the lower end of the supplied water guide jacket 7 has a plurality of fixing holes 15 fixing lower ends of the flexible fiber filter media 6. A density control plate 9 having a doughnut shape is interposed between the supplied water guide jacket 7 and the filter media fixing plate 12 and prevents the supplied water from flowing to the filter media fixing plate 12 by increasing the water pressure in a hollow portion of the flexible fibers 6 fixed to the filter media fixing plate 12. A porous chamber 10 extends downward from the top of the main body 1 inside the main body, increases a density of an upper ends of the flexible fibers 6, and has a plurality of treated water supply holes 11, so as to bring in water treated (clarified) by the filter media 6 and discharge the water outside of the main body. A concentrated filtrate discharge jacket 16 covers a portion of the top of the main body 1 and discharges a concentrated filtrate, during backwashing, outside of the main body 1. A lower attached structure 13 supports the filter media fixing plate 12 from below and has a backwash air supply pipeline for supplying backwash air during backwashing.

Referring to FIG. 10, the density control plate 9 prevents water supplied via the supplied water guide jacket 7 from flowing to a upper discharge pipeline 3 instead of passing through the filter media layer in the upper portion of the main body 1. That is, the density control plate 9 prevents the supplied water from flowing downward by increasing the density of the flexible fibers 6 in the hollow portion.

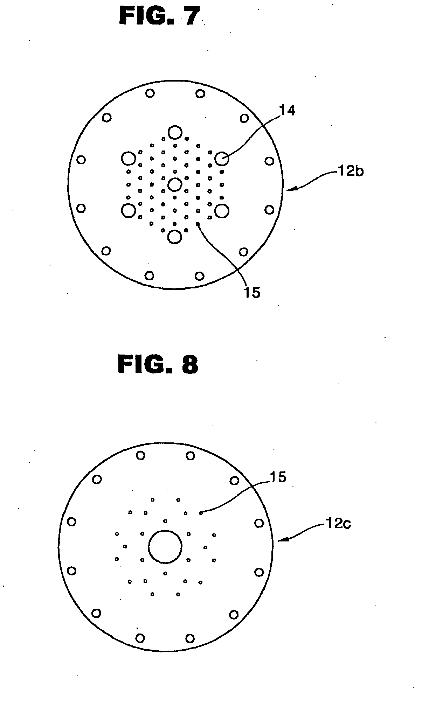

According to an embodiment of the present invention, a lower attached structure 13a, shown in FIG. 4, is installed together with a filter media fixing plate 12a (see FIG. 6) or 12b (see FIG. 7) on which backwash air supply holes 14 are formed on the corners of a hexagon or on the corners of and the centers of a hexagon to uniformly supply backwash air. According to another embodiment of the present invention, a lower attached structure 13b, in which backwash air discharge holes 4b are formed around the upper portion of a backwash air supply pipeline 4, shown in FIG. 5, is installed together with a filter media fixing plate 12c (see FIG. 8) having no backwash air supply holes.

Upper ends of the flexible fibers 6 are not fixed in place. A plurality of supplied water passing holes 8 are formed in the main body 1 where the supplied water guide jacket 7 contacts the main body 1, as shown in FIGS. 2 and 9. The concentrated filtrate discharge jacket 16 disposed on the upper end of the main body 1 is cylindrical and discharges the concentrated filtrate, which is discharged during backwashing, outside of the main body while averflowing. The porous chamber 10 has 10 to 50% of the volume of the main body 1, as shown in FIG. 2.

The flexible fibers 6 used as filter media may be composed of a single material or different materials according to the supplied water to be filtered or a degree of treatment required for the supplied water. The flexible fibers 6 may be composed of polyamide, polyester, polyprophylene, etc.

Referring to FIGS. 12 and 13, in the filtering apparatus 100, the supplied water is used as backwash water during backwashing, so that a water tank, and extra pumps, valves and piping for backwash are not required. Since the supplied water is also used as backwash water during backwashing, filtering and backwashing are performed in the same direction, i.e., upward in the main body 1, as shown by a solid arrow and a broken arrow.

In the filtering apparatus 100, backwash air intermittently supplied through the backwash air supply holes 14 of the filter media fixing plate 12 or the backwash air discharge holes 4b of the backwash air supply pipeline 4 into the main body 1 during backwashing produces turbulence, and a shearing stress acting on the flexible fiber filter media 6 allows contaminants entrapped by the filter media 6 to quickly separate from the filter media 6. The backwash air intermittently supplied as described above is generated by an air compressor 62 as shown in FIGS. 12 and 13, stored under high pressure in a storage tank 64 connected to the backwash air supply pipeline 4, and then periodically supplied to the main body during backwashing.

The region of the main body 1 corresponding to the supplied water guide jacket 7 has a porous plate that prevents the supplied water from encountering resistance thereby maintaining constant access rate. The porous chamber 10 is integrated with or separate from the clarified water discharge pipeline 3 and the upper cover structure of the main body 1. The concentrated filtrate discharge jacket 16 is installed on the upper and outer portion of the main body 1 in the form of a jacket and the concentrated filtrate that overflows to the upper portion of the main body 1 is smoothly discharged through the outer jacket. A bundle of flexible fibers 6 is fixed to the filter media fixing plate 12. A single type or various types of flexible fibers 6 having different physical properties with respect to the supply unit and the discharge unit may be used according to a type of matter to be filtered or a degree of treatment of the matter.

The operation of the fine filtering apparatus according to an embodiment of the present invention will now be described with reference to FIGS. 12 and 13. FIG. 12 shows the operation of the fine filtering apparatus during filtration and FIG. 13 shows the operation of the fine filtering apparatus during backwashing.

Referring to FIG. 12, during filtration the filter source water is supplied by a pump P and a clarified water discharge valve V1 connected to the clarified water discharge pipeline 3 is opened. As a result, filter source water from a filter source water tank 52 is supplied to the filtering apparatus 100 and upstream filtration is performed. The water clarified by the filtering apparatus 100 flows to the clarified water storage tank 54 via the main body 1 and the clarified water discharge valve V1. During the filtration process, the backwash air supply valve V2 and the concentrated filtrate discharge valve V3 are kept in a closed state.

More specifically, the suspended solids in the filter source water (supplied water) are entrapped by the filter media while passing through the filter media including the flexible fibers 6 by various mechanisms such as sieve filtration, physiochemical adsorption, isolation, precipitation, capillary phenomenon and the like. The clarified water from which the suspended solids are removed flows to a clarified water storage tank 54 via the discharge valve V1.

As the filtration process continues, the amount of the suspended solids entrapped by the filter media 6 increases, and the filtration resistance is increased and the filtration flux is lowered. Accordingly, the rate at which the clarified water is produced decreases. When the amount of clarified water decreases to less than the desired amount of water, the filtration pressure is higher than a set value or a predetermined filtration duration is complete, backwashing is initiated.

Referring to FIG. 13, during backwashing, the clarified water discharge valve V1 is closed and the backwash air valve V2 and the concentrated filtrate discharge valve V3 are opened. The filter source water contained in the filter source water tank 52 is used as backwash water, and thus, the filter source water and/or backwash source water supply pump P is continuously operated.

During backwashing, the filter media 6 of the filtering apparatus 100 is spread horizontally and vertically and are strongly shaken due to high pressure air supplied to the filtering apparatus 100 by the air compressor 62 and the air storage tank 64, and the backwash water supplied to the filtering apparatus 100 through the filter source water and/or the backwash water supply pump P. Due to the spreading and shaking of the filter media 6, turbulence occurs, which induces shearing stress on the filter media. As a result, the particulates (suspended solids) entrapped by the filter media 6 are separated within a short period. The suspended solids separated from the filter media 6 are mixed in the backwash water, thus forming a concentrated filtrate. The concentrated filtrate is flowed to the concentrated filtrate storage tank 56 via the concentrated filtrate discharge jacket 16 and the concentrated filtrate discharge valve V3.

During the backwashing, the high pressure air generated by the air compressor 62 can be stored in the air storage tank 64, and then the stored high pressure air is periodically supplied to the filtering apparatus 100. As a result, the backwash process can be performed efficiently.

As described above, during backwashing, the filter source water contained in the filter source water tank 52 can be used as backwash water, but backwash water stored in a separate tank may also be used.

When the filter source water stored in the filter source water tank 52 is used as backwash water, a separate backwash water tank, pump, valve, and other piping for supplying the backwash water are not required. Thus, the structure of the filtering apparatus is simple.

Hereinafter, the filtering apparatus of the present invention will further be described with reference to the following Experimental Example.

### Experimental Example - Sewage treatment

The filtering apparatus 100 according to an embodiment of the present invention having a main body with a diameter of 1500 mm and a length of 3000 mm was installed in a sewage disposal plant and operated for six months. The average concentration of the solid substance (SS) in the supplied water was 10.3 ppm and the average concentration of SS in the discharged water was 0.7 ppm. Accordingly, the concentration of SS in the discharged water was always maintained at 1 ppm or less. Also, the average output efficiency was 92.9%. As a result of investigating a distribution of the particle size of the suspended solids in the discharged water and the supplied water, removal efficiencies of 70%, 82%, 85%, 93%, 95%, 98%, and 100% were obtained for particle sizes of 1-3 µm, 3-5 µm, 5-8 µm, 8-10 µm, 10-15 µm, 15-25 µm, and 25 µm or more, respectively. In the sewage or foul water biologically treated, at least 70% of BOD in the discharged water was solid BOD, indicating that when removing the suspended solids in water, BOD was removed too. Accordingly, an average supplied BOD of 9.0 ppm, an average discharged BOD of 3.0 ppm and an average removal rate of BOD of 60.5 % were obtained.

FIGS. 14 through 19 illustrate the results of the Experimental Example. FIG. 14 is a bar graph illustrating removal efficiency with respect to particle diameter of suspended solids in water, FIG. 15 is a graph illustrating removal efficiency of suspended solids in water with respect to operating duration, FIG. 16 is a graph illustrating influx/efflux concentrations of suspended solids in water with respect to operating duration, FIG. 17 is a graph illustrating removal efficiency of BOD with respect to operating duration, FIG. 18 is a graph illustrating influx/efflux concentrations of BOD with respect to operating duration, and FIG. 19 is a graph illustrating variations of pressure and filtration flux with respect to operating duration.

### Industrial Applicability

As described above, a fine filtering apparatus in which a packing density can be controlled with flexible fibers according to embodiments of the present invention has a high filtration efficiency, produces a large amount of clarified water, and has an increased filtering duration, and has low power consumption. In the filtering apparatus, flexible fibers having an effective diameter of 1 to 60 µm and having flexibility, elasticity, and proper surface roughness extend in the longitudinal direction of the apparatus. A jacket shaped unit for supplying source water (supplied water) has a porous influx structure. Clarified water (treated water) is discharged through a central porous chamber. The whole filter media layer can function as a particle-entrapping space.

## Claims

1. A fine filtering apparatus comprising:
a main body (1) which is a main pathway of supplied water, the supplied water flowing in use in the longitudinal direction of the main body (1);
filter media comprising flexible fibers (6) enclosed by the main body (1) and extending in the longitudinal direction of the main body (1), the flexible fibers (6) being able to filter out a variety of suspended solids contained in the supplied water;
a supplied water guide jacket (7) supplying in use the supplied water to the side of the lower portion of the main body (1);
a filter media fixing plate (12) installed below the supplied water guide jacket (7) and having a plurality of fixing holes (15) fixing lower ends of the flexible fibers (6), the upper end of the flexible fibers (6) being not fixed;
a density control plate (9) having a doughnut shape, installed between the supplied water guide jacket (7) and the filter media fixing plate (12) and preventing the supplied water from flowing to the filter media fixing plate (12) by increasing filling density of the flexible fibers (6) fixed to the filter media fixing plate (12) within a hollow portion of the density control plate (9);
an inner porous chamber (10) extending from the top of the main body (1) and having a constant radius, the inner porous chamber (10) increasing the filling density of upper ends of the flexible fibers (6), and having a plurality of treated water supply holes (11) formed therein through which in use water treated by the filter media is discharged outside of the main body (1); and
a concentrated filtrate discharge jacket (16) covering a portion of the top and surrounding part of the outside of the main body (1) for discharging in use during backwashing the concentrated filtrate with the solids entrapped by the filter media by injection of backwash water through the supplied water guide jacket (7) outside of the main body (1).

2. The fine filtering apparatus of claim 1, wherein a plurality of supplied water passing holes (8) are formed in an area of the main body (1) corresponding to the supplied water guide jacket (7), and the concentrated filtrate discharge jacket (16) is cylindrical and has a jacket shape such that in use the concentrated filtrate is discharged outside of the filtering apparatus through a predetermined discharge pipeline (5).

3. The fine filtering apparatus of claim 1, further comprising a lower attached structure (13) supporting the filter media fixing plate (12) from below and having a backwash air supply pipeline (4) for supplying backwash air during backwashing during use.

4. The fine filtering apparatus of claim 3, wherein a plurality of backwash air supply holes (14, 4b), through which the backwash air passes in use, are formed in the filter media fixing plate (12) in a hexagonal arrangement, or are formed in the upper portion of the backwash air supply pipeline (4) within the main body (1).

5. The fine filtering apparatus of claim 1, wherein the volume of the inner porous chamber (10) is 10 to 50 % of the volume of the main body.

6. Water filtering method using a fine filtering apparatus according to claim 3, wherein the supplied water and backwash air are supplied to the respective supply pipelines and filtering and backwashing are performed in the same direction.

7. Water filtering method using a fine filtering apparatus according to claim 1, wherein filtering and backwashing are performed in the same direction by using the supplied water as the backwash water during backwashing.

8. Water filtering method using a fine filtering apparatus of claim 4, wherein during backwashing, backwash air intermittently supplied through the backwash air supply holes (14) of the filter media fixing plate (12) or the backwash air discharge holes (4b) of the backwash air supply pipeline (4) produces turbulence thereby generating shearing stress in the flexible fiber (6) filter media and allowing contaminants entrapped by the filter media to separate from the filter media in a short period.

9. Water filtering method of claim 8, wherein the backwash air is generated by an air compressor (62), stored under high pressure in a storage tank (64) connected to the backwash air supply pipeline (4), and then periodically supplied to the main body (1) during backwashing.

## Patentansprüche

1. Feinfilterungsvorrichtung enthaltend:
einen Hauptkörper (1), der eine Zuführwasserhauptleitung bildet, wobei das Zuführwasser im Betrieb in longitudinaler Richtung des Hauptkörpers (1) fließt;
ein Filtermittel enthaltend flexible Fasern (6), die von dem Hauptkörper (1) umschlossen sind und sich in longitudinaler Richtung des Hauptkörpers (1) erstrecken, wobei die flexiblen Fasern (6) geeignet sind, eine Vielzahl von in dem Zuführwasser enthaltenen, schwebenden Festkörpern auszufiltern,
eine Zuführwasserführungshülse (7), die im Betrieb das Zuführwasser an die Seite des unteren Abschnitts des Hauptkörpers (1) zuführt;
eine Filtermittelbefestigungsscheibe (12), die unterhalb der Zuführwasserführungshülse (7) angebracht ist und eine Vielzahl von Befestigungslöchern (15) aufweist, die unteren Enden der flexiblen Fasern (6) befestigen, wobei das obere Ende der flexiblen Fasern (6) nicht befestigt ist;
eine Dichte-Regelungsscheibe (9), die eine Torus-Form aufweist, zwischen der Zuführwasserführungshülse (7) und der Filtermittelbefestigungsscheibe (12) angeordnet ist und durch Erhöhen der Fülldichte der flexiblen Fasern (6), die an der Filtermittelbefestigungsscheibe (12) innerhalb eines hohlen Abschnitts der Dichte-Regelungsscheibe (9) befestigt sind, verhindert, dass das Zuführwasser zu der Filtermittelbefestigungsscheibe (12) fließt;
eine innere poröse Kammer (10), die sich von dem Deckel des Hauptkörpers (1) erstreckt und einen konstanten Radius aufweist, wobei die innere poröse Kammer (10) die Dichte der oberen Enden der flexiblen Fasern (6) erhöht, und eine Vielzahl von darin ausgebildeten Zuführlöchern (11) für behandeltes Wasser aufweist, durch welche im Betrieb mittels der Filtermittel behandeltes Wasser aus dem Hauptkörper (1) abgegeben wird; und
eine Filtratkonzentrat-Abflusshülse (16), die einen Abschnitt des Deckels abdeckt und Teile des Äußeren des Hauptkörpers (1) umgibt, um im Betrieb während einer Rückspülung das Filtratkonzentrat mit den durch das Filtermittel eingefangenen Festkörpern mittels Injektion von Rückspülwasser durch die Zuführwasserführungshülse (7) aus dem Hauptkörper (1) abzugeben.

2. Feinfilterungsvorrichtung nach Anspruch 1, wobei eine Vielzahl von Zuführwasserdurchgangslöchern (8) in einem Bereich des Hauptkörpers (1) ausgebildet sind, der mit der Zuführwasserführungshülse (7) korrespondiert, und die Filtratkonzentrat-Abflusshülse (16) zylindrisch ist und eine Hülsenform aufweist, sodass im Betrieb das Filtratkonzentrat aus der Filterungsvorrichtung über eine vorbestimmte Abflussleitung (5) abgegeben wird.

3. Feinfilterungsvorrichtung nach Anspruch 1, ferner enthaltend eine an der Unterseite angefügte Struktur (13), welche die Filtermittelbefestigungsscheib (12) von unten abstützt und eine Rückspülluftzuführleitung (4) zum Zuführen von Rückspülluft während einer Rückspülung im Betrieb aufweist.

4. Feinfilterungsvorrichtung nach Anspruch 3, wobei eine Vielzahl der Rückspülluftzuführlöcher (14, 4b), durch welche die Rückspülluft im Betrieb passiert, in der Filtermittelbefestigungsscheibe (12) in einer hexagonalen Anordnung ausgebildet sind oder in dem oberen Abschnitt der Rückspülluftzuführleitung (4) innerhalb des Hauptkörpers (1) ausgebildet sind.

5. Feinfilterungsvorrichtung nach Anspruch 1, wobei das Volumen der inneren porösen Kammer (10) 10-50 % des Volumens des Hauptkörpers entspricht.

6. Wasserfilterungsverfahren, das eine Feinfilterungsvorrichtung nach Anspruch 3 verwendet, wobei das Zuführwasser und die Rückspülluft zu den entsprechenden Zuführleitungen zugeführt werden und Filterung und Rückspülung in die gleiche Richtung ausgeführt werden.

7. Wasserfilterungsverfahren, das eine Feinfilterungsvorrichtung nach Anspruch 1 verwendet, wobei Filterung und Rückspülung mittels Verwendung des Zuführwassers als Rückspülwasser während der Rückspülung in die gleiche Richtung ausgeführt werden.

8. Wasserfilterungsverfahren, das eine Feinfilterungsvorrichtung nach Anspruch 4 verwendet, wobei während der Rückspülung die durch die Rückspülluftzuführlöcher (14) der Filtermittelbefestigungsscheibe (12) oder durch die Rückspülluftabgabelöcher (4b) der Rückspülluftzuführleitung (4) intermittierend zugeführte Luft Turbulenz erzeugt und dabei eine Scherspannung in der flexiblen Faser (6) des Filtermittels hervorruft und ermöglicht, die durch das Filtermittel eingefangenen Verunreinigungen von dem Filtermittel innerhalb einer kurzen Zeit zu trennen.

9. Wasserfilterungsverfahren nach Anspruch 8, wobei die Rückspülluft mittels eines Luftkompressors (62) erzeugt wird, unter hohem Druck in einem mit der Rückspülluftzuführleitung (4) verbundenen Speichertank (64) gespeichert wird und dann periodisch dem Hauptkörper (1) während der Rückspülung zugeführt wird.

## Revendications

1. Dispositif de filtration fine comprenant :
un corps principal (1) qui est une conduite d'arrivée d'eau principale, l'eau amenée s'écoulant, en service, dans la direction longitudinale du corps principal (1) ;
une couche de filtration comprenant des fibres flexibles (6) incluses dans le corps principal (1) et s'étendant dans la direction longitudinale du corps principal (1), les fibres flexibles (6) pouvant filtrer un grand nombre de solides en suspension contenus dans l'eau amenée ;
une chemise de guidage de l'arrivée d'eau (7), les solides étant piégés par la couche de filtration, et fournissant en service l'eau sur le côté de la partie inférieure du corps principal (1) ;
une plaque de fixation de la couche de filtration (12), installée sous la chemise de guidage de l'arrivée d'eau (7), et présentant une pluralité de trous de fixation (15) permettant de fixer les extrémités inférieures des fibres flexibles (6), les extrémités supérieures des fibres flexibles (6) n'étant pas fixées ;
une plaque de commande de la densité (9) qui présente une forme de tore, installée entre la chemise de guidage de l'arrivée d'eau (7) et la plaque de fixation de la couche de filtration(12), et qui empêche l'eau amenée de s'écouler dans la plaque de fixation de la couche de filtration(12) en augmentant la densité de remplissage des fibres flexibles (6) fixées sur la plaque de fixation de la couche de filtration(12) à l'intérieur d'une partie creuse de la plaque de commande de la densité (9);
une chambre poreuse intérieure (10) qui s'étend à partir du dessus du corps principal (1) et qui présente un rayon constant, la chambre poreuse intérieure (10) augmentant la densité de remplissage des extrémités supérieures des fibres flexibles (6), et présentant une pluralité d'orifices d'arrivée de l'eau traitée (11) formés à l'intérieur à travers lesquels l'eau traitée par la couche de filtration est évacuée en dehors du corps principal (1) en service ; et
une chemise d'évacuation du filtrat concentré (16) qui couvre une partie du dessus et qui entoure une partie de l'extérieur du corps principal (1) de façon à évacuer en service, au cours d'un lavage à contre-courant, le filtrat concentré à l'extérieur du corps principal (1) par injection d'une eau de lavage à contre-courant à travers la chemise de guidage de l'arrivée d'eau, (7) les solides étant piégés par la couche de filtration.

2. Dispositif de filtration fine selon la revendication 1, dans lequel une pluralité de trous de passage de l'arrivée d'eau (8) sont formés dans une partie du corps principal (1) qui correspond à la chemise de guidage de l'arrivée d'eau (7), et la chemise d'évacuation du filtrat concentré (16) étant cylindrique et présentant une forme de chemise telle qu'en service le filtrat concentré est évacué à l'extérieur du dispositif de filtration par une canalisation d'évacuation prédéterminée (5).

3. Dispositif de filtration fine selon la revendication 1, comprenant en outre une structure fixée inférieure (13) qui supporte la plaque de fixation de la couche de filtration (12) par dessous et qui présente une canalisation d'arrivée d'air de lavage à contre-courant (4) destinée à fournir, en service, l'air de lavage à contre-courant au cours d'un lavage à contre-courant.

4. Dispositif de filtration fine selon la revendication 3, dans lequel une pluralité de trous d'arrivée d'air de lavage à contre-courant (14, 4b), à travers lesquels l'air de lavage à contre-courant passe en service, sont formés dans la plaque de fixation de la couche de filtration (12) dans un agencement hexagonal, ou sont formés dans la partie supérieure de la canalisation d'arrivée d'air de lavage à contre-courant (4) à l' intérieur du corps principal (1).

5. Dispositif de filtration fine selon la revendication 1, dans lequel le volume de la chambre poreuse intérieure (10) est compris entre 10 % et 50 % du volume du corps principal.

6. Procédé de filtration de l'eau utilisant un dispositif de filtration fine selon la revendication 3, dans lequel l'eau amenée et l'air de lavage à contre-courant sont amenés à leurs canalisations d'alimentation respectives, et la filtration et le lavage à contre-courant sont exécutés dans la même direction.

7. Procédé de filtration de l'eau utilisant un dispositif de filtration fine selon la revendication 1, dans lequel la filtration et le lavage à contre-courant sont exécutés dans la même direction en utilisant l'eau amenée en tant qu'eau de lavage à contre-courant, au cours du lavage à contre-courant.

8. Procédé de filtration de l'eau utilisant un dispositif de filtration fine selon la revendication 4, dans lequel au cours du lavage à contre-courant, l'air de lavage à contre-courant, fourni par intermittence à travers les trous d'arrivée d'air de lavage à contre-courant (14) de la plaque de fixation de la couche de filtration (12) ou à travers les trous d'évacuation d'air du lavage à contre-courant (4b) de la canalisation d'arrivée d'air du lavage à contre-courant (4), produit des turbulences qui génèrent une contrainte de cisaillement dans la couche de filtration à fibres flexibles (6) et qui permettent aux contaminants piégés par la couche de filtration de se séparer de la couche de filtration dans un temps court.

9. Procédé de filtration selon la revendication 8, dans lequel l'air du lavage à contre-courant est généré par un compresseur d'air (62), stocké sous pression élevée dans un réservoir de stockage (64) connecté à la canalisation d'arrivée d'air du lavage à contre-courant (4), et ensuite fourni de manière périodique au corps principal (1) au cours du lavage à contre-courant.
